# FASCICULE DE BREVET EUROPEEN

(11) **EP 1 055 490 B1**
(45) Date de publication et mention de la délivrance du brevet: **06.05.2004**
(21) Numéro de dépôt: 00401428.8
(22) Date de dépôt: 23.05.2000
(51) Int. Cl.: B25J 19/00

(54) **Agencement d'actionnement d'une charge en forme d'un support oscillant**
Schwenkbare Tragvorrichtung zum Stützen einer Last
Oscillating support mechanism for carrying a load

(30) Priorité: 25.05.1999 FR 9906574
(43) Date de publication de la demande: 29.11.2000
(73) Titulaire: Process Conception Ingenierie S.A., 92190 Meudon (FR)
(72) Inventeur: Chretien, Gérard, 90500 Beaucourt (FR); Salesse, Christian, 07100 Ammomay (FR); Loriot, Jean-Marc, 75015 Paris (FR)
(74) Mandataire: Berger, Helmut

(56) Documents cités:
- EP-A- 0 189 483
- EP-A- 0 327 094
- US-A- 4 901 591
- PATENT ABSTRACTS OF JAPAN vol. 011, no. 123 (M-581), 17 avril 1987 (1987-04-17) & JP 61 265235 A (MITSUBISHI HEAVY IND LTD), 25 novembre 1986 (1986-11-25)
- PATENT ABSTRACTS OF JAPAN vol. 009, no. 007 (M-350) 12 Janvier 1985 & JP 59 156 632 A (TOYODA KOKI KK) 05 Septembre 1984

## Description

L'invention concerne un agencement d'actionnement d'une charge en forme d'un support oscillant, comprenant un dispositif d'entraînement en pivotement de la charge et des moyens d'équilibrage des forces, notamment de pesanteur, agissant sur la charge.

Le document EP 0 189 483 A (Fanuc) présente un bras manipulateur pivotant autour d'un axe horizontal grâce à un moteur électrique et muni de tels moyens d'équilibrage des forces de pesanteur.

Les documents JP 5 9156632 A (Toyoda) et JP 61265235 A (Mitsubishi) présentent des tables oscillantes munies également de moyens d'équilibrage des forces de pesanteur.

Les dispositifs cités ci-dessus présentent l'inconvénient majeur d'avoir une structure encombrante, en particulier dans un plan horizontal.

La présente invention a pour but de pallier les inconvénients des agencements connus, qui viennent d'être énoncés.

Pour atteindre ce but, l'agencement selon l'invention comporte les caractéristiques énoncées dans la revendication 1.

Les revendications dépendantes 2 à 7 indiquent d'autres caractéristiques avantageuses de l'invention.

L'invention sera mieux comprise et d'autres buts, caractéristiques, détails et avantages de celle-ci apparaîtront plus clairement dans la description explicative qui va suivre faite en référene aux dessins schématiques annexés donnés uniquement à titre d'exemple illustrant un mode de réalisation de l'invention et dans lesquels :
La figure 1 est une vue en perspective d'un agencement d'actionnement selon la présente invention, montrant le support oscillant dans sa position de travail.
La figure 2 est une autre vue en perspective d'un agencement d'actionnement selon l'invention, montrant le support oscillant dans sa position de pivotement de 120°.
La figure 3 est une vue simplifiée dans la direction de la flèche III de la figure 1.

Comme on le voit sur les figures, l'agencement 1 selon l'invention, pour l'actionnement d'une charge dont seulement le support est indiqué en 2, comporte essentiellement un dispositif 3 d'entraînement de la charge et un dispositif 4 d'équilibrage des forces, notamment de pesanteur.

Le support pivotant présente la forme générale d'un U dont la base 6 est configurée pour le support d'un ou de plusieurs outils embarqués, tandis que les branches 7 et 8 sont solidaires d'un arbre 9 qui constitue l'arbre de sortie du dispositif d'équilibrage 4. Ce dernier est du type à fournir à l'arbre 9 un couple de compensation du poids de la charge, qui est sinusoïdal quelle que soit la position angulaire α de la charge. Un tel dispositif d'équilibrage est décrit dans le brevet français N° 2 627 718 et ne sera donc pas écrit ici.Il importe seulement que la charge soit montée solidaire de l'arbre de sortie de ce dispositif, indiqué en 9 sur les figures.

Le dispositif d'équilibrage 4 est monté sur un bâti 11 comportant une plaque 12 qui s'étend parallèlement à l'axe 9.

Le dispositif d'entraînement en pivotement 3 de la charge comporte essentiellement un vérin 13 dont le cylindre 14 est monté pivotant autour d'un axe 15 supporté par deux pattes de support 16 formant palliers qui font parties du bâti 11 et sont en saillie verticalement vers le haut de la plaque de bâti 12. L'extrémité extérieure de la tige 17 du vérin est réalisée sous forme d'une chape 18 à laquelle est articulé en 19 le support oscillant ou pivotant 2, par l'intermédiaire d'une bielle 20, parallèle aux branches 7 et 8, qui est solidaire du support. L'articulation 19 étant excentrique par rapport à l'axe de l'arbre 9, tout déplacement de la tige de vérin 17 provoque un pivotement du support 2.

On constate encore que le cylindre de vérin 14 passe au travers d'un évidement 22 pratiqué dans le bâti 12, afin d'avoir une course suffisante pour obtenir un angle de débattement du support 2 allant jusqu'à 120° par rapport à la position sur butée 24, sans modifier la conception du bâti 12.

L'agencement, selon l'invention, comporte un dispositif de butée mécanique 24 opérant entre la bielle 20 et le bâti 12, et coopérant avec une came de détection en forme de haricot 25 solidaire de la bielle 20. Cette came comporte une fente 26 en forme d'arc de cercle dont le centre se trouve sur l'axe de l'arbre d'articulation 9, et présente une longueur correspondant à un angle de débattement de 120°. Cette fente permet le réglage de 0° à 120° du détecteur de position arrière du support oscillant 2.

Les détections en positions avant et arrière du support oscillant sont assurées par le détecteur double 28 monté sur le support 27, lui-même solidaire du bâti 12, à proximité de la butée mécanique 24 assurant la précision d'arrêt en position avant (ou "travail") du support oscillant 2. Dans la fente 26 s'engage un élément de guidage de la butée 24.

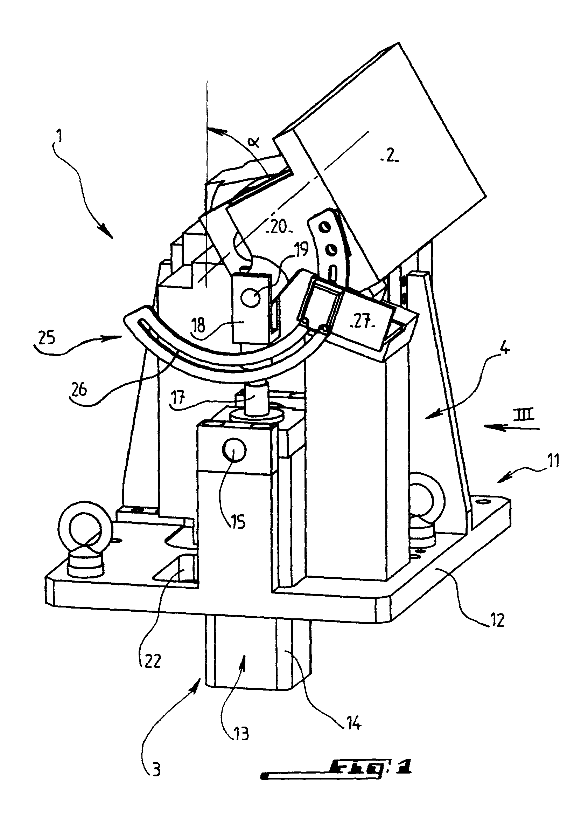

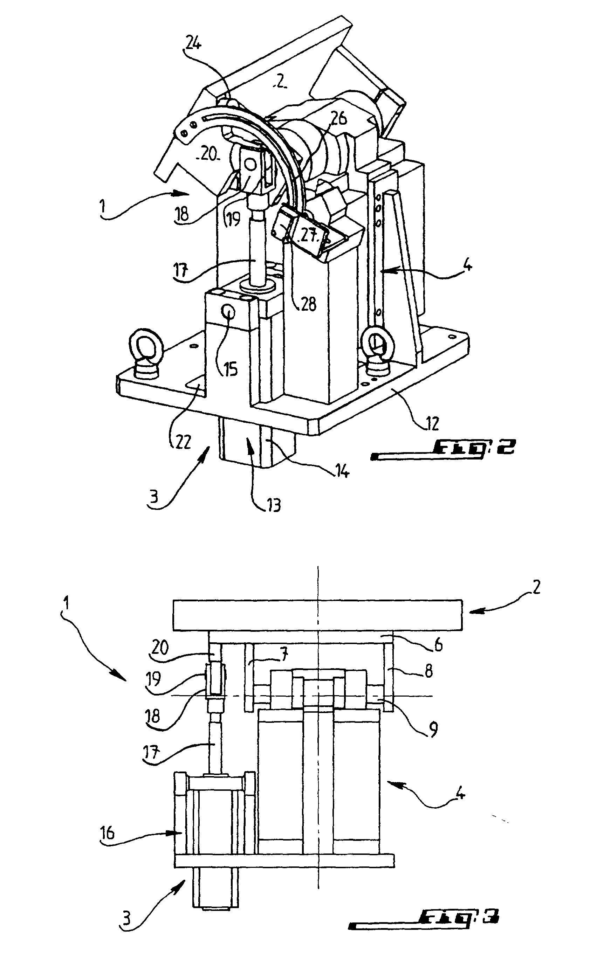

L'agencement est complété par un jeu de détecteur 24 de position de repos représentée sur la figure 2 et travail représentée sur la figure 1, dont les positions sont réglables en fonction de l'angle de débattement retenu.

L'agencement selon l'invention présente de nombreux avantages. Etant donné que le dispositif d'équilibrage fournit à l'arbre de pivotement 9 un couple de compensation du poids de la charge quelle que soit la position, la motorisation, à savoir le vérin 13, doit seulement fournir l'effort qui est nécessaire à la mise en mouvement de la charge, car l'équilibreur est correctement réglé de façon à assurer un couple moteur équivalent aux couples engendrés par l'effet de pesanteur. L'agencement selon l'invention est beaucoup moins encombrant qu'un système de conception classique et est particulièrement avantageux lorsqu'il est utilisé pour un couple proche de la capacité maximale de l'équilibreur. L'angle de débattement du support oscillant 2, d'un maximum de 120° dans le cas présent, peut être limité en fonction du besoin, par le choix d'un vérin ayant une course inférieure. L'agencement selon l'invention permet l'arrêt de la charge dans n'importe quelle position intermédiaire de sa course, sans nécessité d'y ajouter un système de blocage mécanique. Cet avantage est particulièrement intéressant d'un point de vue sécurité en cas de coupure de l'énergie motrice, par le fait qu'il supprime le risque de mouvements incontrôlés de la charge embarquée, dû notamment à la pesanteur. Un autre avantage très intéressant réside dans le fait que le dispositif est facilement adaptable à une variation de la masse de la charge embarquée durant la mise au point où la vie de la machine sans modification de la motorisation, mais par simple modification du réglage de l'équilibreur en adaptant le type et le nombre de ressorts utilisés.

L'agencement selon l'invention constitue un ensemble qui forme un module préassemblé sur laquelle il ne reste à construire que l'élément spécifique à l'application voulue, et une rehausse sous le bâti permettant le positionnement dans l'espace de la machine, en fonction de son utilisation. En fait, pour chaque taille d'équilibreur, l'ensemble de l'agencement équilibré est standardisé : la motorisation est adaptée seulement au couple résiduel, la position de travail est déterminée par la tige de vérin rentrée, l'angle de débattement est variable et déterminée par la course du vérin et la position de repos est déterminée par la fin de course du vérin à tige sortie. Le fait que le dispositif d'équilibrage 4 constituant le pallier de support oscillant 2 et le dispositif d'entraînement 3 sont montés sur le même bâti permet d'intégrer une fonction standard en l'état dans la conception d'une machine. D'autre part, le fait que la position de travail de l'agencement est déterminée par la position rentrée de la tige de piston du vérin assure une conception standard de la fonction quel que soit l'angle de débattement nécessaire. Enfin, le fait que le cylindre du vérin passe à travers l'évidemment dans la plaque de base du bâti permet l'obtention d'un angle de débattement important sans modifier la conception de l'ensemble de la fonction.

## Revendications

1. Agencement d'actionnement d'une charge présentant la forme d'un support oscillant, comprenant un dispositif d'entraînement en pivotement du support autour d'un axe de pivotement et des moyens d'équilibrage des forces notamment de pesanteur, agissant sur le support oscillant où
les moyens d'équilibrage sont adaptés pour fournir à l'axe de pivotement du support oscillant un couple de compensation sinusoïdale quel que soit l'angle de pivotement α du support (2), tandis que le dispositif d'entraînement (3) est un dispositif produisant un effort sensiblement constant quelle que soit la position angulaire du support (2) ;
l'agencement comprend un bâti de support (11) du dispositif d'équilibrage (4) et du dispositif d'entraînement (3), qui est pourvu d'une plaque de base sur lequel sont montés ces deux dispositifs (3, 4),
**caractérisé en ce que** l'arbre (9) entraîné en pivotement par le dispositif d'entraînement (3) est l'arbre de sortie du dispositif d'équilibrage (4) et **en ce que** le dispositif d'entraînement (3) comprend un vérin hydraulique (13) dont le cylindre (14) passe à travers un évidement (22) pratiqué dans la plaque de base de bâti (12) et est monté pivotant en (15) sur ce bâti.

2. Agencement selon la revendication 1, **caractérisé en ce que** le dispositif d'entraînement est un vérin (13) dont la tige de piston (17) est articulée par une bielle (20) au support oscillant (2)

3. Agencement selon l'une des revendications 1 ou 2, **caractérisé en ce que** le support oscillant est réalisé sous forme d'un U (2), sur lequel peut être monté au moins un outil.

4. Agencement selon l'une des revendications 1 à 3, **caractérisé en ce qu'**il comporte un dispositif de butée mécanique (24) du mouvement de pivotement du support oscillant (2).

5. Agencement selon la revendication 4, **caractérisé en ce qu'**une came de détection de position (25) en forme d'un haricot est solidaire du support oscillant (2) et coopère avec le dispositif de butée mécanique (24).

6. Agencement selon l'une des revendications 1 à 5, **caractérisé en ce que** la position de travail de l'agencement est déterminée par la position rentrée de la tige de piston (17) du vérin (13).

7. Agencement selon l'une des revendications 1 à 6, **caractérisé en ce que** l'angle de battement du support oscillant est réglable par variation de la course de la tige de piston (17) du vérin.

## Patentansprüche

1. Betätigungseinrichtung für eine Last, die die Form eines schwenkbaren Trägers aufweist, umfassend eine Vorrichtung zum Schwenkantrieb des Trägers um eine Schwenkachse und Mittel zum Ausgleichen der Kräfte, insbesondere der Schwerkräfte, die auf den schwenkbaren Träger einwirken, wobei die Ausgleichsmittel derart ausgeführt sind, dass sie an die Schwenkachse des schwenkbaren Trägers ein sinusförmiges Ausgleichsmoment unabhängig vom Schwenkwinkel α des Trägers (2) liefern, während die Antriebsvorrichtung (3) eine Vorrichtung ist, die eine im Wesentlichen konstante Kraft, unabhängig von der Winkelposition des Trägers (2) erzeugt, wobei die Einrichtung ein Stützgehäuse (11) für die Ausgleichsvorrichtung (4) und die Antriebsvorrichtung (3) umfasst, das mit einer Grundplatte versehen ist, auf der diese beiden Vorrichtungen (3, 4) befestigt sind, **dadurch gekennzeichnet, dass** die in Schwenkung von der Antriebsvorrichtung (3) angetriebene Welle (9) die Ausgangswelle der Ausgleichsvorrichtung (4) ist, und dass die Antriebsvorrichtung (3) einen Hydraulikzylinder (13) umfasst, dessen Walze (14) durch eine Aussparung (22) hindurch verläuft, die in der Grundplatte des Gehäuses (12) vorgesehen und bei (15) schwenkbar auf diesem Gehäuse befestigt ist.

2. Einrichtung nach Anspruch 1, **dadurch gekennzeichnet, dass** die Antriebsvorrichtung ein Zylinder (13) ist, dessen Kolbenstange (17) durch ein Zwischenglied (20) an dem schwenkbaren Träger (2) angelenkt ist.

3. Einrichtung nach einem der Ansprüche 1 oder 2, **dadurch gekennzeichnet, dass** der schwenkbare Träger in Form eines U (2) ausgeführt ist, auf dem mindestens ein Werkzeug befestigt werden kann.

4. Einrichtung nach einem der Ansprüche 1 bis 3, **dadurch gekennzeichnet, dass** sie eine mechanische Anschlagvorrichtung (24) für die Schwenkbewegung des schwenkbaren Trägers (2) umfasst.

5. Einrichtung nach Anspruch 4, **dadurch gekennzeichnet, dass** eine Nocke zur Positionserfassung (25) in Form einer Bohne fest mit dem schwenkbaren Träger (2) verbunden ist und mit der mechanischen Anschlagvorrichtung (24) zusammenwirkt.

6. Einrichtung nach einem der Ansprüche 1 bis 5, **dadurch gekennzeichnet, dass** die Arbeitsposition der Einrichtung durch die Einzugsposition der Kolbenstange (17) des Zylinders (13) bestimmt wird.

7. Einrichtung nach einem der Ansprüche 1 bis 6, **dadurch gekennzeichnet, dass** der Schlagwinkel des schwenkbaren Trägers durch Veränderung des Hubs der Kolbenstange (17) des Zylinders eingestellt werden kann.

## Claims

1. An arrangement for actuating a load taking the form of an oscillating support, comprising a device for driving pivoting of the support about a pivot axis and means for balancing forces, in particular gravitational forces, acting on the oscillating support,
wherein the balancing means are adapted to apply to the pivot of the oscillating support a sinusoidal compensation torque regardless of the pivoting angle α of the support (2), whereas the driving device (3) produces a substantially constant force regardless of the angular position of the support (2);
the arrangement comprises a support frame (11) for the balancing device (4) and the driving device (3) that is provided with a base plate on which said two devices (3, 4) are mounted,
**characterised in that** the shaft (9) whose pivoting is driven by the driving device (3) is the output shaft of the balancing device (4) and **in that** the driving device (3) comprises a hydraulic actuator (13) having a cylinder (14) that passes through an opening (22) formed in the base plate of the frame (12) and is mounted to pivot at (15) on said frame.

2. An arrangement according to claim 1, **characterised in that** the driving device is an actuator (13) having a piston rod (17) that is articulated by a link (20) to the oscillating support (2).

3. An arrangement according to either claim 1 or claim 2, **characterised in that** the oscillating support takes the form of a U-shape (2) on which at least one tool can be mounted.

4. An arrangement according to any one of claims 1 to 3, **characterised in that** it includes a device (24) for mechanically stopping pivoting movement of the oscillating support (2).

5. An arrangement according to claim 4, **characterised in that** a kidney-shaped position detection cam (25) is fastened to the oscillating support (2) and co-operates with the mechanical stop device (24).

6. An arrangement according to any one of claims 1 to 5, **characterised in that** the working position of the arrangement is determined by the retracted position of the piston rod (17) of the actuator (13).

7. An arrangement according to any one of claims 1 to 6, **characterised in that** the angle of relative movement of the oscillating support can be adjusted by varying the travel of the piston rod (17) of the actuator.
